# EUROPÄISCHE PATENTSCHRIFT

(11) **EP 1 819 565 B1**
(45) Veröffentlichungstag und Bekanntmachung des Hinweises auf die Patenterteilung: **23.02.2011**
(21) Anmeldenummer: 05811002.4
(22) Anmeldetag: 24.11.2005
(51) Int. Cl.: B60T 8/36

(54) **HYDRAULIKAGGREGAT**
HYDRAULIC UNIT
GROUPE HYDRAULIQUE

(30) Priorität: 02.12.2004 DE 102004058329; 01.06.2005 DE 102005024979
(43) Veröffentlichungstag der Anmeldung: 22.08.2007
(73) Patentinhaber: Continental Teves AG & Co. oHG, 60488 Frankfurt (DE)
(72) Erfinder: HINZ, Axel, 61267 Neu-Anspach (DE); VOGEL, Günther, 63303 Dreieich (DE); LENZ, René, 60599 Frankfurt am Main (DE)
(86) Internationale Anmeldenummer: PCT/EP2005/056184
(87) Internationale Veröffentlichungsnummer: WO 2006/058859

(56) Entgegenhaltungen:
- EP-A- 0 636 525
- US-A1- 2003 066 720
- US-B1- 6 398 315

## Beschreibung

Die Erfindung betrifft ein Hydraulikaggregat für eine schlupfgeregelte Bremsanlage, insbesondere zur Verwendung in einem Kraftrad, nach dem Oberbegriff des Patentanspruchs 1.

Ein Hydraulikaggregat der vorgenannten Art ist bereits aus der EP 1 194 321 B1 und der U5 6 398 315 B1 bekannt. Das Hydraulikaggregat besteht aus einem blockförmigen Aufnahmekörper, der in mehreren Ventilaufnahmebohrungen einer ersten und zweiten Ventilreihe zur Blockierschutzregelung Ein- und Auslassventile aufnimmt. Im Aufnahmekörper ist ferner eine Pumpenbohrung angeordnet, die quer zur Einmündung der Ventilaufnahmebohrungen in den Aufnahmekörper ausgerichtet ist, mit einer Motoraufnahmebohrung, die senkrecht auf die Pumpenbohrung gerichtet ist, sowie mit mehreren die Ventilaufnahmebohrungen und die Pumpenbohrung verbindenden Druckmittelkanälen, die eine hydraulische Verbindung zwischen den in den Aufnahmekörper einmündenden Bremsdruckgeberanschlüssen und mehreren Radbremsanschlüssen herzustellen vermögen.

Es ist die Aufgabe der Erfindung, bei einem Hydraulikaggregat der angegebenen Art die Baugröße des Aufnahmekörpers sowie den Herstellaufwand zur Anordnung der Druckmittelkanäle im Aufnahmekörper zu reduzieren und für die Verwendung in einem Kraftrad anzupassen, ohne Nachteile hinsichtlich der Bremsregelfunktion hinnehmen zu müssen.

Diese Aufgabe wird für ein Hydraulikaggregat der angegebenen Art mit den kennzeichnenden Merkmalen des Anspruchs 1 gelöst.

Weitere Merkmale, Vorteile und Anwendungsmöglichkeiten der Erfindung werden im Nachfolgenden anhand der Beschreibung eines Ausführungsbeispiels anhand mehrerer Zeichnungen erläutert.

Es zeigen:
- Fig. 1: einen Hydraulikschaltplan für ein Hydraulikaggregat mit den erfindungsgemäßen Merkmalen,
- Fig. 2: den Aufnahmekörper für das Hydraulikaggregat nach Fig. 1 in einer Draufsicht auf die Ventilaufnahme- bohrungen,
- Fig. 3: den Aufnahmekörper nach Figur 2 um 180 Grad ge- klappt in einer Draufsicht auf die Motoraufnahme- bohrung,
- Figur 4: eine Perspektivdarstellung des Aufnahmekörpers,
- Figur 5: eine Gesamtansicht des mit allen Funktionselementen bestückten Hydraulikaggregats,
- Figur 6: eine Funktionserweiterung des Hydraulikschaltplans nach Figur 1 um einen weiteren Druckregelkanal, der unter Beibehaltung des Erfindungsgedankens durch zusätzliche Druckmittelkanäle, die für zwei weitere Ventilaufnahmebohrungen eine Verbindung mit der Vorderradbremse ermöglichen, im Aufnahmekörper rea- lisiert ist.

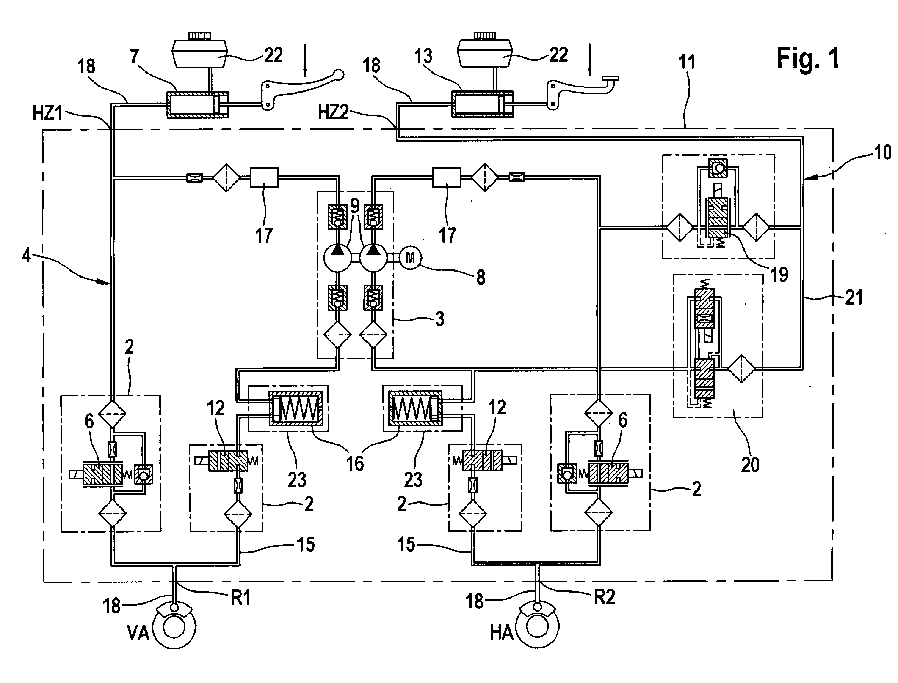

Die Figur 1 zeigt zum besseren Verständnis des in den nachfolgenden Figuren abgebildeten Aufnahmekörpers 11 den Hydraulikschaltplan für eine Kraftradbremsanlage. Die Bremsanlage besteht aus einem hydraulisch betätigbaren Vorderrad- und Hinterradbremskreis 4, 10, mit jeweils einem am Vorderradbremskreis 4 angeschlossenen, durch Handkraft proportional betätigbaren Hauptbremszylinder 7 und mit einem fußkraftproportional betätigbaren Hauptbremszylinder 13 an der Hinterradbremse HA.

Zur Bremsschlupfregelung sind im Vorderrad- als auch Hinterradbremskreis 4, 10 elektromagnetisch betätigbare Ein- und Auslassventile 6, 12 eingesetzt, wobei jeweils das in Grundstellung geöffnete Einlassventil 6 in die Bremsleitung des Vorder- bzw. Hinterradbremskreises 4, 10 eingesetzt ist, welche den zugehörigen Hauptbremszylinder 7, 13 mit der Vorderrad- bzw. der Hinterradbremse VA, HA verbindet. Das in Grundstellung geschlossene Auslassventil 12 ist jeweils in eine Rücklaufleitung 15 eines jeden Bremskreises eingesetzt, welche die Vorder- bzw. Hinterradbremse VA, HA mit jeweils einem Niederdruckspeicher 16 mit der Saugseite einer zweikreisig aufgeteilten Pumpe 9 verbindet, die nach dem Rückförderprinzip arbeitet. Die Pumpe 9 steht über in die beiden Bremskreise eingesetzte Geräuschdämpfungskammern 17 mit den Bremsleitungen 18 in Verbindung, so dass eine bedarfsgerechte Rückförderung des jeweils von der Vorder- bzw. Hinterradbremse VA, HA abgelassenen Bremsflüssigkeitsvolumens gewährleistet ist.

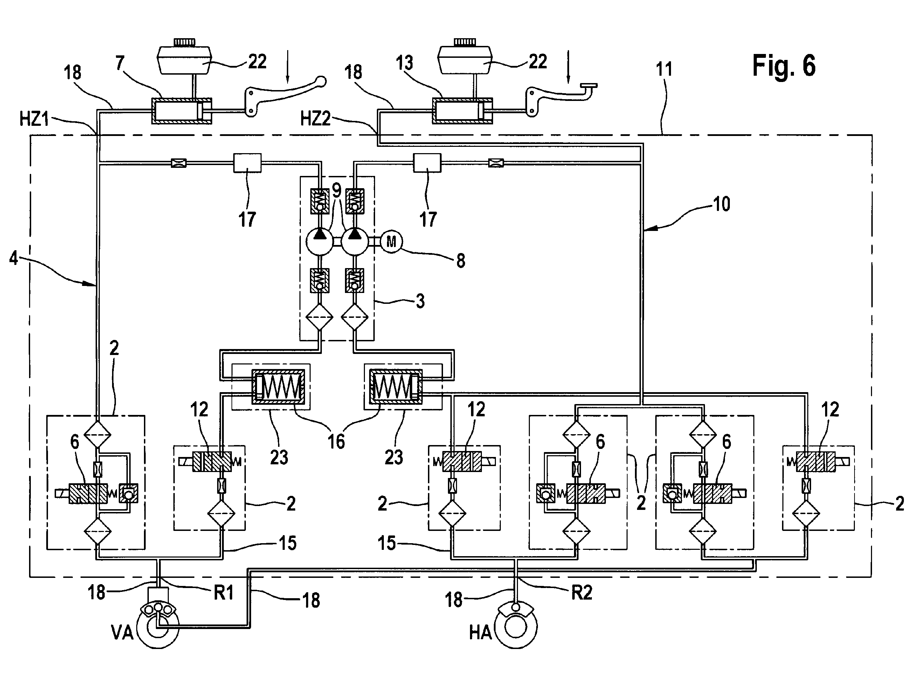

Abweichend von Figur 1 ist in Figur 6 zusätzlich an den Hinterradbremskreis 10 eine weitere Bremsleitung 18 angeschlossen, die zur Vorderradbremse VA führt, so dass bei der Betätigung des an den Hinterradbremskreis 10 angeschlossenen Hauptbremszylinders 13 vorteilhaft auch dessen Bremsdruck an der Vorderradbremse VA wirksam ist. Ferner weist diese weitere Bremsleitung 18 die bereits aus Figur 1 bekannte Schaltungsanordung nach dem Rückförderprinzip für ein paar weitere Ein- und Auslassventile 6, 12 auf, um auch an der Vorderradbremse VA bei Betätigung des Hinterradbremskreises 10 ein Blockieren verhindern zu können. Die Ein- und Auslassventile 6, 12 sind entsprechend den Schaltplänen nach Fig. 1 und 6 als binär schaltende Sitzventile ausgeführt. Bei Wunsch oder Bedarf können diese auch als Proportionalregelventile angesteuert werden, wozu eine geeignet Drucksensorik zur Anwendung gelangt, die den jeweils herrschenden Druck in den Radbremsen sowie den von den Hauptzylindern 7, 13 eingesteuerten Druck erfasst.

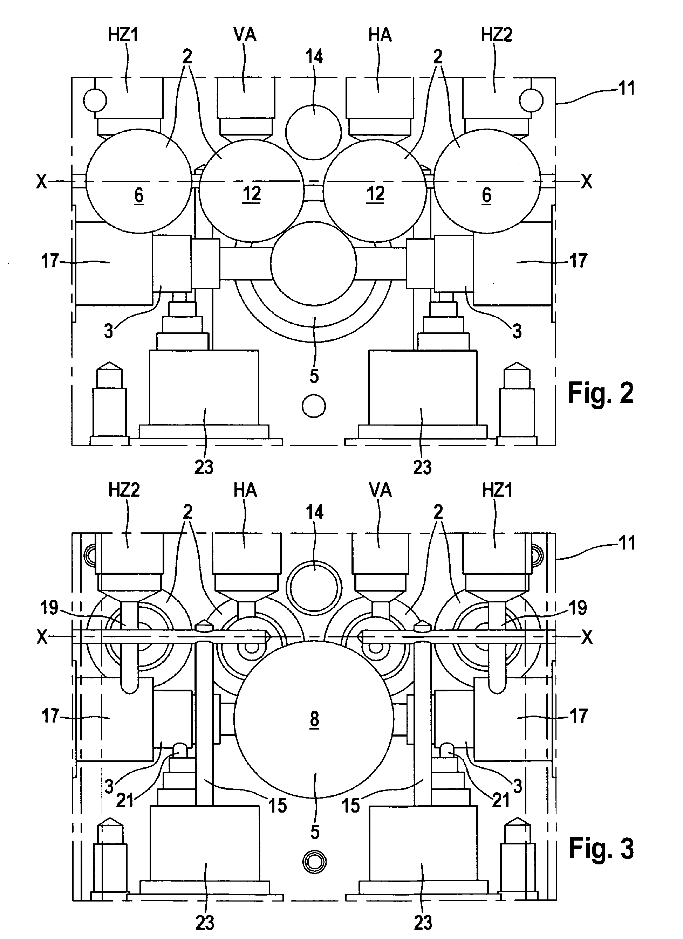

Ausgehend vom in Fig. 1 dargestellten Schaltplan werden nunmehr die wesentlichen Merkmale der Erfindung anhand den Figuren 2 bis 5 erläutert.

Die Fig. 2 bis 4 zeigen die wesentliche Merkmale eines Hydraulikaggregates zur Verwendung für die bremsschlupfgeregelte Kraftradbremsanlage in unterschiedlichen Ansichten, mit einem blockförmigen Aufnahmekörper 11, der in vier Ventilaufnahmebohrungen 2 einer einzigen Ventilreihe X die Einund Auslassventile 6, 12 aufnimmt. Eine im Aufnahmekörper 11 angeordnete Pumpenbohrung 3 ist quer zur Einmündungsrichtung der Ventilaufnahmebohrungen 2 in den Aufnahmekörper gerichtet. Ferner weist der Aufnahmekörper 11 eine Motoraufnahmebohrung 5 für den Elektromotor 8 auf, die auf halber Länge der Pumpenbohrung senkrecht auf die Pumpenbohrung 3 gerichtet ist. Weiterhin sind mehrere die Ventilaufnahmebohrungen 2 und die Pumpenbohrung 3 verbindenden Druckmittelkanäle vorgesehen, die eine hydraulische Verbindung zwischen zwei in den Aufnahmekörper 11 einmündenden Bremsdruckgeberanschlüssen HZ1, HZ2 und zwei Radbremsanschlüssen VA, HA herzustellen vermögen,

Anhand den Figuren 2 bis 4 verdeutlicht sieht die Erfindung vor, dass die Ein- und Auslassventile 6, 12 in einer einzigen Ventilreihe X angeordnet sind, wobei die Ein- und Auslassventile 6, 12 durch ein Steuergerät 1 elektromagnetisch ansteuerbar sind, das ausschließlich im Bereich der einzigen Ventilreihe X auf dem Aufnahmekörper 11 aufgesetzt ist. Hierdurch ist vorteilhaft eine besonders schlanke, an die Anbauverhältnisse eines Kraftrades angepasste Kontur des Aufnahmekörpers 11 gewährleistet.

Bezüglich der erwähnten Anordnung des Steuergerätes 1 am Aufnahmekörper 11 wird auf die Gesamtdarstellung des Hydraulikaggregats in Figur 6 verwiesen.

Aus den Fig. 2-4 geht ferner hervor, dass die Auslassventile 12 zwischen den Einlassventilen 6 in der einzigen Ventilreihe X angeordnet sind, die parallel zur Pumpenbohrung 3 angeordnet ist, wodurch sich einfach herzustellende Kanalbohrungen zur hydraulischen Verbindung der Auslassventile 12 mit den Niederdruckspeicherbohrungen 23 und den Ventilaufnahmebohrungen 2 der Einlassventile 6 ergeben.

Die für die Einlassventile 6 vorgesehenen Ventilaufnahmebohrungen 2 münden vorteilhaft unmittelbar neben der Pumpenbohrung 3 in den Aufnahmekörper 11 ein, wodurch eine kurze Kanalverbindung zwischen jeweils dem Druckanschluss HZ1, HZ2 und der jeweils am äußeren Ende der Pumpenbohrung 3 ausgebildeten Geräuschdämpfungskammer 17 möglich ist.

Durch die Anordnung der Ein- und Auslassventile 6, 12 in einer einzigen Ventilreihe X münden die für die Auslassventile 12 vorgesehenen Ventilaufnahmebohrungen 2 unmittelbar neben den Radbremsanschlüssen VA, HA in den Aufnahmekörper 11 ein, wodurch auch die für die Auslassventile 12 erforderliche Kanalbohrungen möglichst kurz ausgeführt werden können.

Die Radbremsanschlüsse VA, HA sind somit zwischen einem paar Bremsdruckgeberanschlüssen HZ1, HZ2 angeordnet, die mittels zweier unabhängig voneinander betätigbarer Bremsdruckgeber 7, 13 getrennt voneinander hydraulisch beaufschlagbar sind. Ferner weist der Aufnahmekörper 11 zur elektrischen Kontaktierung des Steuergeräts 1 mit dem in die Motoraufnahmebohrung 5 eingesetzten Elektromotors 8 zwischen den beiden Radbremsanschlüssen VA, HA eine Durchgangsbohrung 14 auf.

Die Pumpenbohrung 3 ist zwischen der die Ein- und Auslassventile 6, 12 aufnehmenden Ventilreihe X und einem paar Druckspeicherbohrungen 23 angeordnet, die quer zur Pumpen- und den Ventilaufnahmebohrungen 3, 2 in den Aufnahmekörper 11 einmünden.

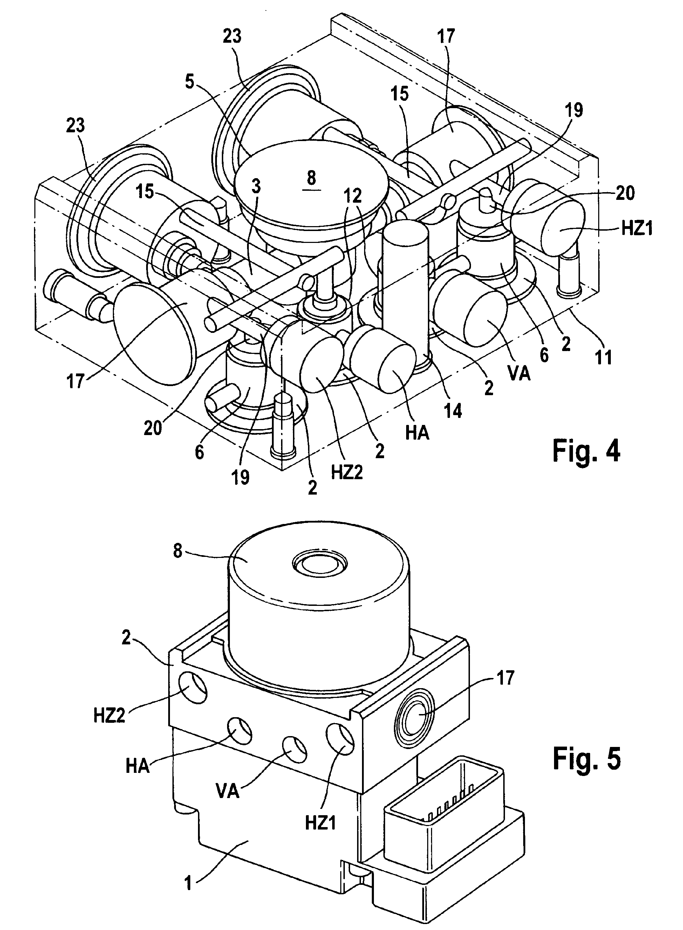

Aus Fig. 3, 4 geht deutlich hervor, dass die beiden Bremsdruckgeberanschlüsse HZ1, HZ2 mit den an der Pumpenbohrung 3 angrenzenden Geräuschdämpfungskammern 6 über zwei radial, vorzugsweise tangential stromabwärts zu den Pumpendruckventilen in die Pumpenbohrung 3 einmündenden Druckmittelkanäle 19 in Verbindung stehen.

Wie aus Figur 4 erkennbar ist, weist jeder Druckmittelkanal 19 jeweils eine Abzweigung 20 zu einer der beiden Ventilaufnahmebohrungen 2 jedes Bremskreises auf, die zur Aufnahme der Einlassventile 6 jeweils am Ende der Ventilreihe X angeordnet sind.

Da die Geräuschdämpfungskammern 17 in den diametral gelegenen Enden der Pumpenbohrung 3 angeordnet sind, lassen sich sowohl die Geräuschdämpfungskammern 17 als auch die Pumpenbohrung 3 mittels von außen in die beiden Seitenflächen des Aufnahmekörpers 11 eingesetzte Verschlußkörper druckmitteldicht verschließen. Die den Aufnahmekörper 11 rechtwinklig zu den beiden Niederdruckspeicherbohrungen 23 durchquerende Pumpenbohrung 3 steht für jeden Pumpenkreis jeweils über einen Pumpensaugkanal 21 mit den beiden parallel zueinander ausgerichteten Niederdruckspeicherbohrungen 23 in Verbindung.

Die Pumpensaugkanäle 21 sind durch den abgestuften Boden jeder Niederdruckspeicherbohrung 23 besonders kurz ausgeführt, in dem jeweils ein Pumpensaugventil (Rückschlagventil) eingesetzt ist.

Der Boden jeder Niederdruckspeicherbohrung 23 weist ferner für jeden Bremskreis eine quer zur Ventilreihe X im Aufnahmekörper 11 ausgerichtete Rücklaufleitung 15 auf, die als Geradbohrung durch den Boden jeder Niederdruckspeicherbohrung 23 zur Ventilaufnahmebohrung 2 des Auslassventils 12 geführt ist. In vorliegendem Ausführungsbeispiel setzt sich die Rücklaufleitung 15 in der Ebene der Ventilreihe X als abgewinkelter Kanal in Richtung der für das Auslassventil 12 vorgesehenen Ventilaufnahmebohrung 2 eines jeden Bremskreises fort.

Durch die Anordnung der Auslassventile 12 zwischen den Einlassventilen 6 in der Ventilreihe X sind unter Beachtung einer möglichst schlanken Bauform des Aufnahmekörpers 11 kurze und damit einfach herzustellende Rücklaufleitungen 15 möglich, die das Totraumvolumen zur verbesserten Entlüftung und Befüllung der Sekundärkreise der Bremsanlage mit Bremsflüssigkeit gering halten, so dass sich der zur Erstbefüllung des Hydraulikaggregats erforderliche Evakuier- und Befüllprozeß vereinfacht. Unter dem Begriff Sekundärkreis sind die zwischen den normalerweise geschlossenen Auslaßventilen 12, den Niederdruckspeichern 5 und der Pumpenbohrung 3 bestehenden Kanalverbindungen zu verstehen.

Schließlich sind die Ventilaufnahmebohrungen 2, die Pumpenbohrung 3 und die Niederdruckspeicherbohrungen 23 wie abgebildet und beschrieben derart im Aufnahmekörper 11 zueinander ausgerichtet, dass der Aufwand an Verschlussstopfen zum Abdichten der Druckmittelkanäle an den Außenflächen des Aufnahmekörpers 11 ein Minimum beträgt.

### Bezugszeichenliste

- 1: Steuergerät
- 2: Ventilaufnahmebohrung
- 3: Pumpenbohrung
- 4: Vorderradbremskreis
- 5: Motoraufnahmebohrung
- 6: Einlassventil
- 7: Hauptbremszylinder
- 8: Elektromotor
- 9: Pumpe
- 10: Hinterradbremskreis
- 11: Aufnahmekörper
- 12: Auslassventil
- 13: Hauptbremszylinder
- 14: Durchgangsbohrung
- 15: Rücklaufleitung
- 16: Niederdruckspeicher
- 17: Geräuschdämpfungskammer
- 18: Bremsleitung
- 19: Druckmittelkanal
- 20: Abzweigung
- 21: Pumpensaugkanal
- 22: Ausgleichsbehälter
- 23: Druckspeicherbohrung
- VA: Radbremsanschluss
- HA: Radbremsanschluss
- HZ1: Druckanschluss

## Patentansprüche

1. Hydraulikaggregat für eine schlupfgeregelte Bremsanlage,
- mit einem Aufnahmekörper, der in mehreren Ventilaufnahmebohrungen Ein- und Auslassventile aufnimmt,
- mit einer im Aufnahmekörper angeordneten Pumpenbohrung, die quer zur Einmündungsrichtung der Ventilaufnahmebohrungen in den Aufnahmekörper gerichtet ist,
- mit einer Motoraufnahmebohrung für einen Elektromotor, die senkrecht auf die Pumpenbohrung gerichtet ist,
- mit mehreren die Ventilaufnahmebohrungen und die Pumpenbohrung verbindenden Druckmittelkanäle, die eine hydraulische Verbindung zwischen zwei in den Aufnahmekörper einmündenden Bremsdruckgeberanschlüssen und mehreren Radbremsanschlüssen herzustellen vermögen,
**dadurch gekennzeichnet, dass** die Ein- und Auslassventile (6, 12) gemeinsam in einer einzigen Ventilreihe (X) angeordnet sind.

2. Hydraulikaggregat nach Anspruch 1, **dadurch gekennzeichnet, dass** die Ein- und Auslassventile (6, 12) durch ein Steuergerät (1) elektromagnetisch ansteuerbar sind, das auf der einzigen Ventilreihe (X) des Aufnahmekörpers (11) angeordnet ist.

3. Hydraulikaggregat nach Anspruch 1 oder 2, **dadurch gekennzeichnet, dass** die Auslassventile (12) zwischen den Einlassventilen (6) in der einzigen Ventilreihe (X) angeordnet sind.

4. Hydraulikaggregat nach Anspruch 1, **dadurch gekennzeichnet, dass** die Ventilreihe (X) parallel zur Pumpenbohrung (3) angeordnet ist, wobei die für die Einlassventile (6) vorgesehenen Ventilaufnahmebohrungen (2) unmittelbar neben der Pumpenbohrung (3) in den Aufnahmekörper (11) einmünden.

5. Hydraulikaggregat nach Anspruch 1, **dadurch gekennzeichnet, dass** die für die Auslassventile (12) vorgesehenen Ventilaufnahmebohrungen (2) unmittelbar neben den Radbremsanschlüssen (VA, HA) in den Aufnahmekörper (11) einmünden.

6. Hydraulikaggregat nach Anspruch 1, **dadurch gekennzeichnet, dass** die Radbremsanschlüsse (VA, HA) zwischen einem paar Bremsdruckgeberanschlüssen (HZ1, HZ2) angeordnet sind, die mit zwei unabhängig voneinander betätigbaren Bremsdruckgebern (7, 13) verbindbar sind.

7. Hydraulikaggregat nach Anspruch 1, **dadurch gekennzeichnet, dass** der Aufnahmekörper (11) zur elektrischen Kontaktierung eines Steuergeräts (1) mit einem in die Motoraufnahmebohrung (5) eingesetzten Elektromotors (8) zwischen den Radbremsanschlüssen (VA, HA) eine Durchgangsbohrung (14) aufweist, die vom Steuergerät (1) verschließbar ist.

8. Hydraulikaggregat nach Anspruch 1, **dadurch gekennzeichnet, dass** die Pumpenbohrung (3) zwischen der die Ein- und Auslassventile (6, 12) aufnehmenden Ventilreihe (X) und einem paar Druckspeicherbohrungen (23) angeordnet ist, die quer zur Pumpen- und den Ventilaufnahmebohrungen (3, 2) in den Aufnahmekörper (11) einmünden.

## Claims

1. Hydraulic unit for a slip-controlled brake system,
- having a holding body which holds inlet and outlet valves in a plurality of valve holding bores,
- having a pump bore which is arranged in the holding body and which is aligned perpendicular to the direction in which the valve holding bores open into the holding body,
- having a motor-holding bore for an electric motor, which motor-holding bore is aligned perpendicular to the pump bore,
- having a plurality of pressure medium ducts which connect the valve holding bores and the pump bore and which are capable of producing a hydraulic connection between two brake pressure transmitter ports, which open into the holding body, and a plurality of wheel brake ports, **characterized in that** the inlet and outlet valves (6, 12) are arranged together in a single valve row (X).

2. Hydraulic unit according to Claim 1, **characterized in that** the inlet and outlet valves (6, 12) can be electromagnetically actuated by means of a control unit (1) which is arranged on the single valve row (X) of the holding body (11).

3. Hydraulic unit according to Claim 1 or 2, **characterized in that** the outlet valves (12) are arranged between the inlet valves (6) in the single valve row (X).

4. Hydraulic unit according to Claim 1, **characterized in that** the valve row (X) is arranged parallel to the pump bore (3), with the valve holding bores (2) provided for the inlet valves (6) opening into the holding body (11) directly adjacent to the pump bore (3).

5. Hydraulic unit according to Claim 1, **characterized in that** the valve holding bores (2) provided for the outlet valves (12) open into the holding body (11) directly adjacent to the wheel brake ports (VA, HA).

6. Hydraulic unit according to Claim 1, **characterized in that** the wheel brake ports (VA, HA) are arranged between a pair of brake pressure transmitter ports (HZ1, HZ2) which can be connected to two brake pressure transmitters (7, 13) which can be actuated independently of one another.

7. Hydraulic unit according to Claim 1, **characterized in that**, for electrical contact between a control unit (1) and an electric motor (8) inserted into the motor-holding bore (5), the holding body (11) has between the wheel brake ports (VA, HA) a through bore (14) which can be closed off by the control unit (1).

8. Hydraulic unit according to Claim 1, **characterized in that** the pump bore (3) is arranged between the valve row (X), which holds the inlet and outlet valves (6, 12), and a pair of pressure accumulator bores (23) which open into the holding body (11) perpendicular to the pump and valve holding bores (3, 2).

## Revendications

1. Groupe hydraulique pour une installation de freinage à régulation du patinage, comprenant
- un corps de réception qui reçoit des soupapes d'entrée et de sortie dans plusieurs alésages de réception de soupapes,
- un alésage de pompe situé dans le corps de réception, qui est orienté transversalement à la direction d'embouchure des alésages de réception de soupapes dans le corps de réception,
- un alésage de réception de moteur pour un moteur électrique qui est orienté perpendiculairement à l'alésage de pompe,
- plusieurs canaux de fluide sous pression reliant les alésages de réception de soupapes et l'alésage de pompe, qui permettent de créer une connexion hydraulique entre deux raccords de générateur de pression de frein débouchant dans le corps de réception et plusieurs raccords de frein de roue,
**caractérisé en ce que** les soupapes d'entrée et de sortie (6, 12) sont disposées en commun dans une rangée de soupapes unique (X).

2. Groupe hydraulique selon la revendication 1, **caractérisé en ce que** les soupapes d'entrée et de sortie (6, 12) peuvent être commandées de manière électromagnétique par un appareil de commande (1), qui est disposé sur la rangée de soupapes unique (X) du corps de réception (11).

3. Groupe hydraulique selon la revendication 1 ou 2, **caractérisé en ce que** les soupapes de sortie (12) sont disposées entre les soupapes d'entrée (6) dans la rangée de soupapes unique (X).

4. Groupe hydraulique selon la revendication 1, **caractérisé en ce que** la rangée de soupapes (X) est disposée parallèlement à l'alésage de pompe (3), les alésages de réception de soupapes (2) prévus pour les soupapes d'entrée (6) débouchant directement à proximité de l'alésage de pompe (3) dans le corps de réception (11).

5. Groupe hydraulique selon la revendication 1, **caractérisé en ce que** les alésages de réception de soupapes (2) prévus pour les soupapes de sortie (12) débouchent directement à côté des raccords de frein de roue (VA, HA) dans le corps de réception (11).

6. Groupe hydraulique selon la revendication 1, **caractérisé en ce que** les raccords de frein de roue (VA, HA) sont disposés entre une paire de raccords de générateur de pression de frein (HZ1, HZ2), qui peuvent être connectés à deux générateurs de pression de frein (7, 13) actionnables indépendamment l'un de l'autre.

7. Groupe hydraulique selon la revendication 1, **caractérisé en ce que** le corps de réception (11) présente un alésage traversant (14) pour la mise en contact électrique d'un appareil de commande (1) avec un moteur électrique (8) inséré dans l'alésage de réception de moteur (5) entre les raccords de frein de roue (VA, HA), qui peut être fermé par l'appareil de commande (1).

8. Groupe hydraulique selon la revendication 1, **caractérisé en ce que** l'alésage de pompe (3) est disposé entre la rangée de soupapes (X) recevant les soupapes d'entrée et de sortie (6, 12) et une paire d'alésages d'accumulateur de pression (23), qui débouchent dans le corps de réception (11) transversalement aux alésages de réception de soupapes et de pompe (3, 2).
